# EUROPÄISCHE PATENTSCHRIFT

(11) **EP 1 206 019 B1**
(45) Veröffentlichungstag und Bekanntmachung des Hinweises auf die Patenterteilung: **10.01.2007**
(21) Anmeldenummer: 01105217.2
(22) Anmeldetag: 03.03.2001
(51) Int. Cl.: H02B 1/14, H02G 5/06, H02B 1/06

(54) **Abdeckung für ein Sammelschienensystem**
Cover for busbars
Capot pour barres omnibus

(30) Priorität: 14.11.2000 DE 10056340
(43) Veröffentlichungstag der Anmeldung: 15.05.2002
(73) Patentinhaber: Jean Müller GmbH Elektrotechnische Fabrik, 65343 Eltville (DE)
(72) Erfinder:
(74) Vertreter: Quermann, Helmut

(56) Entgegenhaltungen:
- DE-U- 8 714 583
- US-A- 4 727 220

## Beschreibung

Die Erfindung betrifft eine Abdeckung für ein Sammelschienensystem, wobei die Abdeckung auf mindestens eine Sammelschiene aufsteckbar ist, wobei die Abdeckung durch mindestens zwei Abdeckelemente gebildet ist, die flächige Abdeckabschnitte für die Sammelschienen aufweisen, wobei die Abdeckelemente, quer zur Längserstreckung der Sammelschienen positioniert, auf die Sammelschiene aufsteckbar und in überlappende Anordnung bringbar sind.

Am Markt befindliche Abdeckungen für Sammelschienensysteme werden so platziert, dass die jeweilige Abdeckung eine Sammelschiene abdeckt. Die Abdeckung wird somit in Längserstreckung der Sammelschiene positioniert. Die Abdeckungen sind üblicherweise als Strangpreßprofil, somit als Meterware erhältlich. Bei der Montage muß generell das Profil auf die passende Länge gekürzt werden. Eine Demontage zur Erweiterung einer Anlage ist schwierig und unter Spannung aus sicherheitstechnischen Gründen nicht verantwortbar.

Eine Variante der am Markt befindlichen Abdeckungen ist einteilig, in Form einer offenen Umhüllung für die Sammelschiene. Sie eignet sich nur für einen engen Bereich von Sammelschienenabmessungen, weil bei dieser Abdeckung Konturelemente der Abdeckung gleichzeitig Federelemente darstellen, die sicherstellen, dass die Abdeckung die Sammelschiene sicher umhüllt. Es sind ferner am Markt befindliche Abdeckungen in Art zweiteiliger Systeme bekannt. Diese bestehen aus einem Rückenteil und einem Abdeckteil, die über eine Verzahnung ineinandergeklipst werden können und die unterschiedliche Sammelschienenabmessungen durch eine innen angebrachte Stufung abdecken können.

Für Systeme mit fester Modulteilung sind Abdeckungen erhältlich, die dieser Modulteilung angepaßt sind. Als Beispiel ist die Leerfeldabdeckung für Energieverteilungen im EVU-(Energie-Versorgungs-Unternehmen)-Bereich zu nennen.

Eine Abdeckung der eingangs genannten Art ist aus der US-A-4,727,220 bekannt. Dort ist die Abdeckung durch zwei, identisch ausgebildete, L-förmig gestaltete Abdeckelemente gebildet. Diese lassen sich, jeweils um 180° zueinander verdreht angeordnet, ineinander stecken, so dass identische Schenkel der jeweiligen L-förmigen Abdeckelemente parallel zueinander zu liegen kommen. Insofern ist jeder Schenkel des jeweiligen Abdeckelements mit parallelen Führungen versehen, so dass mittels dieser Führungen die Abdeckelemente unterschiedlich weit ineinander gesteckt werden können. Diese unterschiedlich weite Zusammensteckbarkeit der beiden Abdeckelemente ist unter dem Aspekt zu sehen, dass die Abdeckung hinsichtlich des Abstandes der Sammelschienen des Sammelschienensystems anpassbar sein soll. Bei horizontal angeordneten Sammelschienen lässt sich die Abdeckung somit bezüglich ihrer vertikalen Abmessung durch unterschiedlich weites Zusammenstecken der Abdeckelemente unter dem Aspekt variabler Abstände der Sammelschienen verändern. Die Abdeckelemente sind parallel zur Ebene der Sammelschienen auf zwei Sammelschienen aufsteckbar.

Aufgabe der Erfindung ist es, eine Abdeckung für ein Sammelschienensystem zu schaffen, die einfach herstellbar und einfach montierbar ist, wobei die Abdeckung insbesondere universell verwendbar sein soll. Die Abdeckung soll unter Spannung montierbar und demontierbar sein.

Gelöst wird die Aufgabe bei einer Abdeckung der eingangs genannten Art dadurch, dass die Abdeckelemente der Abdeckung senkrecht zur Ebene der Sammelschienen auf mindestens eine der Sammelschienen aufsteckbar sind.

Die Erfindung schlägt eine Abdeckung für ein Sammelschienensystem vor, wobei die Abdeckung auf mindestens eine Sammelschiene aufsteckbar und durch mindestens zwei Abdeckelemente gebildet ist, die flächige Abdeckabschnitte für die Sammelschienen aufweisen, wobei die Abdeckelemente quer zur Längserstreckung der Sammelschienen positioniert auf die Sammelschiene aufsteckbar und in überlappende Anordnung bringbar sind.

Ein wesentliches Merkmal der vorliegenden Erfindung ist darin zu sehen, dass die Abdeckelemente bzw. das jeweilige Abdeckelement quer zur Längserstreckung der Sammelschienen positioniert werden bzw. positioniert wird. Dies bedeutet, dass die Abdeckung des Sammelschienensystems, über die Länge der jeweiligen Sammelschiene betrachtet, durch überlappende Anordnung von mindestens zwei Abdeckelementen, in aller Regel sogar mehreren Abdeckelementen erfolgt. Das jeweilige Abdeckelement deckt dabei mehrere Sammelschienen ab, in aller Regel alle parallel zueinander angeordneten Sammelschienen des Sammelschienensystems.

Wesentlich ist des weiteren, dass die auf die Sammelschiene aufsteckbaren Abdeckelemente in überlappende Anordnung bringbar sind. In aller Regel ist es deshalb nicht erforderlich, die standardisierten Abdeckelemente in irgendeiner Weise zu kürzen, sondern es reicht aus, benachbarte Abdeckelemente in eine mehr oder weniger überlappende Anordnung zu bringen, um das Sammelschienensystem auf der definierten Länge der jeweiligen Sammelschiene abzudecken.

Wesentlich ist ferner, dass die Abdeckelemente der Abdeckung senkrecht zur Ebene der Sammelschienen auf mindestens eine der Sammelschienen aufsteckbar sind. Die Aufsteckbewegung erfolgt somit senkrecht zur Ebene der Sammelschienen. Die Steckansätze sind beispielsweise als Rastnasen ausgebildet, wobei sie insbesondere derart gestaltet sind, dass sie federnd sind. Durch diese Federfunktion können die Rastnasen im Zusammenhang mit unterschiedlich dicken Sammelschienen verwendet werden und diese sicher zwischen der Rastnase und dem Abdeckelement klemmen. Insbesondere bei der Verwendung von Rastnasen ist vorgesehen, dass diese stufenförmig ausgebildet sind, entsprechend der modifizierbaren Sammelschienenstärke. Als zweckmäßig wird es ferner angesehen, wenn die Funktion des Klemmens bzw. federnden Klemmens von der Funktion eines Anschlages des Abdeckelementes bezüglich der dieser zugeordneten Sammelschiene bzw. der dieser zugeordneten Sammelschienen getrennt ist. Hierzu weist das Abdeckelement mindestens einen Anschlag auf, den die diesem zugewandte Sammelschiene im Bereich einer Längsseite kontaktiert.

Erfindungsgemäß reicht es aus, wenn das jeweilige Abdeckelement, obwohl es unter Umständen mehrere parallel angeordnete Sammelschienen abdeckt, mit einer Sammelschiene verbunden wird, indem es auf diese Sammelschiene aufgesteckt wird. Es wird allerdings als bevorzugt angesehen, wenn das Abdeckelement im Bereich mehrerer, insbesondere aller Sammelschienen auf diese aufsteckbar ist.

Es reicht grundsätzlich aus, wenn das jeweilige Abdeckelement einen flächigen Abdeckabschnitt für die Sammelschienen aufweist. Der Abschnitt wird somit parallel zu den Hauptflächen der Sammelschienen positioniert. Vorzugsweise besitzt das jeweilige Abdeckelement im Querschnitt die Form eines U oder L, so dass der längere Abschnitt des U bzw. L den flächigen Abdeckabschnitt für die Sammelschiene, der die Hauptfläche der Sammelschienen darstellt, abdeckt, während die kurzen Bereiche des U bzw. der kurze Bereich des L die äußeren Sammelschienen bzw. die äußere Sammelschiene des Sammelschienensystems seitlich abdeckt. Sind die Sammelschienen horizontal und parallel zueinander angeordnet, deckt der kurze Bereich des L die obere Sammelschiene des Sammelschienensystems oben ab.

Aufgesteckt werden kann das jeweilige Abdeckelement auf einfachste Art und Weise, indem es mit mindestens einem Steckansatz versehen ist, der dem Aufstecken auf eine der Sammelschienen dient. Vorzugsweise sind mehrere Steckansätze vorgesehen, so dass die Befestigung des Abdeckelementes im Bereich mehrerer Sammelschienen erfolgt.

Das Abdeckelement besteht vorzugsweise aus Kunststoff und ist insbesondere einteilig ausgebildet. Es ist insbesondere daran gedacht, dass das Abdeckelement als Kunststoffspritzgußteil ausgebildet ist.

Die überlappende Funktion benachbarter Abdeckelemente kann auf unterschiedliche Art und Weise bewerkstelligt werden. Es wird als zweckmäßig angesehen, die Abdeckelemente identisch auszubilden. In diesem Zusammenhang kann ein nach vorne versetzter Bereich eines Abdeckelementes in die überlappende Anordnung mit einem nach hinten versetzten Bereich eines benachbarten Abdeckelementes bringbar sein, wobei das jeweilige Abdeckelement den nach vorne versetzten Bereich und den nach hinten versetzten Bereich aufweist. Der nach vorne versetzte Bereich ist von den Sammelschienen weg versetzt, der nach hinten versetzte Bereich zu den Sammelschienen hin versetzt.

In besonderen Fällen kann es angezeigt sein, doch eine Breitenreduzierung des Abdeckelementes vorzunehmen. In diesem Zusammenhang ist vorgesehen, dass wesentliche Bereiche des Abdeckelementes mit Einschnürungen versehen sind, derart, dass das Abdeckelement entlang einer beliebigen Einschnürung geteilt werden kann. Das Abdeckelement kann somit um die Breite des wesentlichen Bereiches, der die Einschnürungen aufweist, maximal in seiner Breite reduziert werden. Es ist genauso möglich, das Abdeckelement im Bereich einer ihrer anderen Einschnürungen zu durchtrennen. Zweckmäßig sind die Steckansätze in demjenigen Bereich des Abdeckelementes angeordnet, der nicht mit den Einschnürungen versehen ist. So ist sichergestellt, dass unabhängig von der vorzunehmenden Reduzierung der Breite des Abdeckelementes ein definiertes Positionieren des Abdeckelementes auf der bzw. den Sammelschienen erfolgen kann.

Die Erfindung und deren Weiterbildung schlägt somit eine Sammelschienenabdeckung mit folgenden typischen Eigenschaften vor:
- Die Abdeckung besteht aus mehreren einfach montierbaren Elementen,
- die Elemente können zum Längenausgleich überlappend montiert werden,
- für gegebenenfalls schmale Schutzbereiche lassen sich die Abdeckungen entlang vorgeprägter Einschnürungen bzw. Schlitze einfach kürzen,
- die Trennung der Funktion "Anschlag" und federndes Klemmelement ermöglicht den Einsatz für einen weiten Bereich von Sammelschienenabmessungen.

Das Abdeckelement für Sammelschienensysteme gemäß der Erfindung und deren Weiterbildung weist auf:
- Einzelelemente im wesentlichen als U- oder L-Form, die zum Längenausgleich überlappend montierbar sind,
- federnde Rastnasen zur Erlangung einer weitreichenden Toleranzabdeckung, unabhängig von den Anschlägen für die Schienen,
- wesentliche Bereiche, die durch entsprechende Einschnürungen für das einfache Kürzen der Abdeckung vorgesehen sind.

Nachfolgend ist die Erfindung anhand einer bevorzugten Ausfiährungsforrn erläutert, ohne hierauf beschränkt zu sein.

Es wird ausdrücklich darauf hingewiesen, dass nur die Ausführungsform nach den Figuren 6 bis 11 die Erfindung betrifft. Es zeigt:
- Figur 1: für die erste Ausführungsform eine räumliche Ansicht eines bei der erfindungsgemäßen Abdeckung Verwendung findenden Abdeckelementes, schräg von vorne gesehen,
- Figur 2: das in Figur 1 gezeigte Abdeckelement, schräg von hinten gesehen,
- Figur 3: in einer räumlichen Ansicht ein aus drei Sammelschienen bestehendes Sammelschienensystem mit zwei veranschaulichten Abdeckelementen in einer Gestaltung gemäß der Figuren 1 und 2, wobei eines vor dem Aufstecken auf die Sammelschienen, das andere nach dem Aufstecken auf die Sammelschienen veranschaulicht ist, und zwar schräg von vorne gesehen,
- Figur 4: die in Figur 3 gezeigten Bauteile, schräg von hinten gesehen,
- Figur 5: in einer räumlichen Ansicht, schräg von vorne gesehen, zwei in überlappender Anordnung positionierte, auf das Sammelschienensystem aufgesteckte Abdeckelemente, in einer Gestaltung gemäß Figuren 1 und 2
- Figur 6: für die zweite Ausführungsform, eine räumliche Ansicht eines bei der Abdeckung Verwendung findenden Abdeckelementes, schräg von vorne gesehen,
- Figur 7: das in Figur 6 gezeigte Abdeckelement, schräg von hinten gesehen,
- Figur 8: in einer räumlichen Ansicht ein aus drei Sammelschienen bestehendes Sammelschienensystem mit zwei veranschaulichten Abdeckelementen in einer Gestaltung gemäß der Figuren 6 und 7, wobei eines vor dem Aufstecken auf die Sammelschienen, das andere nach dem Aufstecken auf die Sammelschienen veranschaulicht ist, und zwar schräg von vorne gesehen,
- Figur 9: die in Figur 8 gezeigten Bauteile, schräg von hinten gesehen,
- Figur 10: in einer räumlichen Ansicht, schräg von vorne gesehen, zwei in überlappender Anordnung positionierte, auf das Sammelschienensystem aufgesteckte Abdeckelemente in einer Gestaltung gemäß der Figuren 6 und 7 und
- Figur 11: einen Schnitt durch das Sammelschienensystem bei einem auf dieses aufgesteckten Abdeckelement.

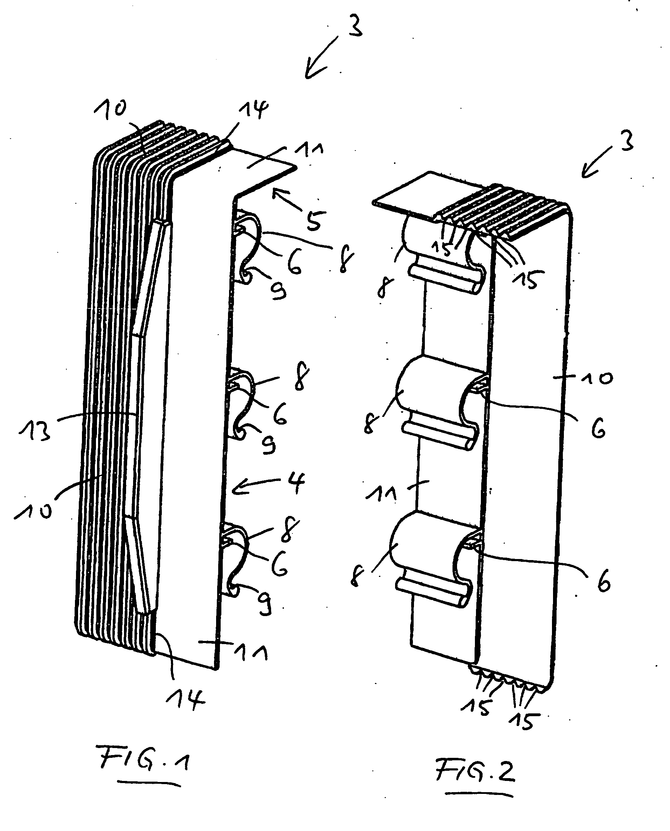

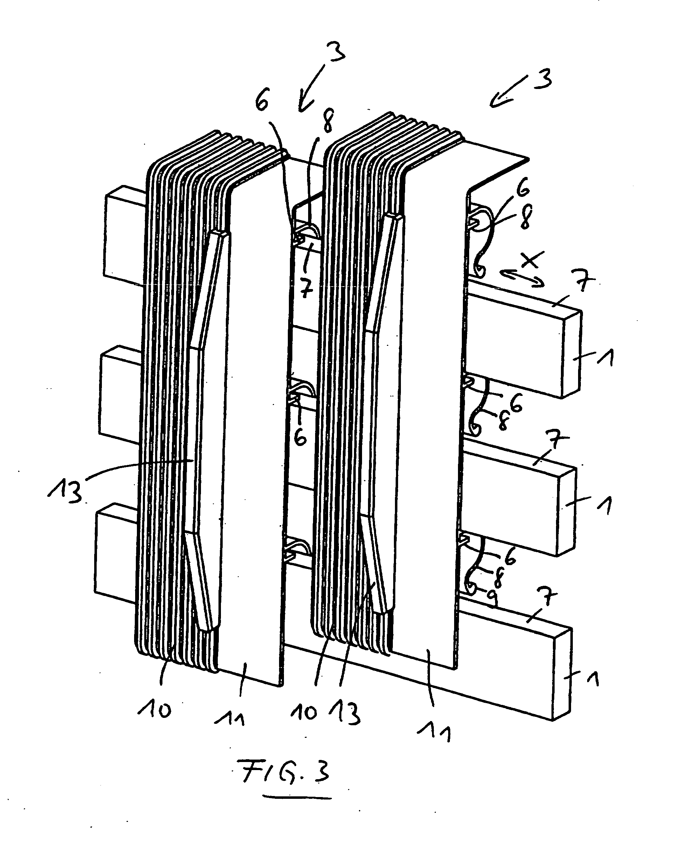

### Ausführungsform nach den Figuren 1 bis 5:

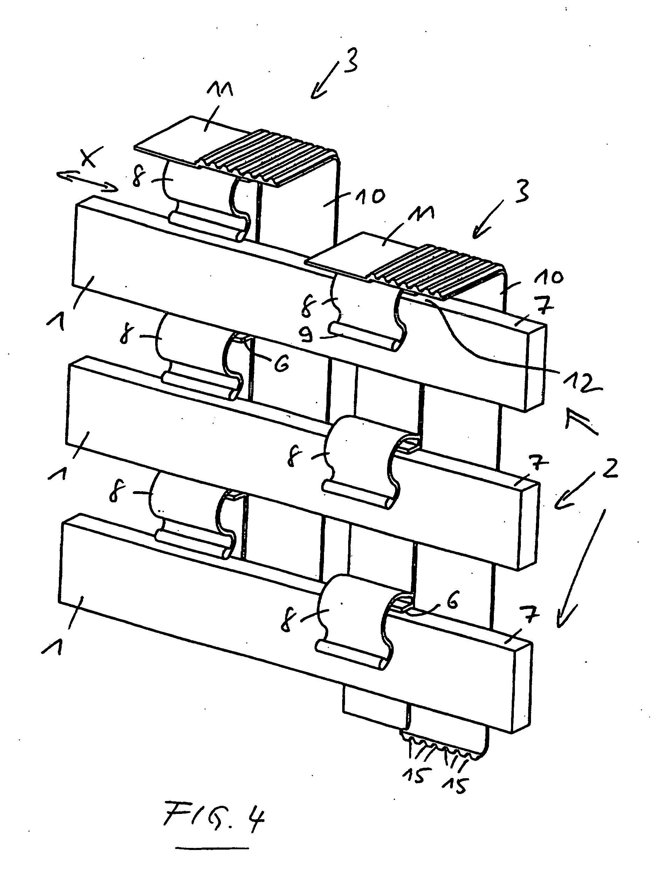

Die Abdeckung für ein aus drei horizontal und parallel zueinander angeordneten Sammelschienen 1 gebildetes Sammelschienensystem 2 ist durch mehrere in überlappender Anordnung gebildete Abdeckelemente 3 gebildet, von denen in den Figuren 3 bis 5 nur zwei veranschaulicht sind. Entsprechend der Längserstreckung X der jeweiligen Sammelschiene 1 sind über deren ganzen Länge Abdeckelemente 3 in überlappender Anordnung zu positionieren. Dies ist aus Gründen zeichnerischer Klarheit nicht veranschaulicht, weil die überlappende Anordnung zwischen dem ersten und dem zweiten Abdeckelement auf dieselbe Art und Weise erfolgt wie die überlappende Anordnung zwischen dem zweiten Abdeckelement und einem nicht gezeigten dritten Abdeckelement usw.

Das jeweilige Abdeckelement 3 ist L-förmig ausgebildet und weist einen langen flächen Abdeckabschnitt 4 und einen kurzen Bereich 5 auf. Der Abdeckabschnitt 4 ist länger als die Breitenerstreckung des Sammelschienensystems 2 und der kurze Bereich 5 besitzt eine Länge, die ein Mehrfaches der Tiefe der jeweiligen Sammelschiene 1 beträgt. Auf der dem kurzen Bereich 5 zugewandten Seite ist der lange Abdeckabschnitt 4 mit drei sich senkrecht zum Abdeckabschnitt 4 und parallel zum kurzen Bereich 5 erstreckenden Anschlägen 6 versehen. Der Abstand benachbarter Anschläge 6 entspricht dem Abstand der oberen Flächen 7 benachbarter Sammelschienen 1. Bestandteil des Abdeckelementes 3 bilden nicht nur die Anschläge 6, sondern auch die dem jeweiligen Anschlag 6 zugeordneten, oberhalb der jeweiligen Anschläge angeordneten Steckansätze, die in Art federnder Haken 8 ausgebildet sind. Aufgrund dieser Ausbildung läßt sich das jeweilige Abdeckelement 3 von oben auf die Sammelschienen 1 aufstecken, wobei die Aufsteckendposition durch den Kontakt der oberen Flächen 7 der Sammelschienen 1 an den Anschlägen 6 des Abdeckelementes 3 vorgegeben wird. In dieser Stellung hintergreift der Endabschnitt 9 des jeweiligen federnden Hakens 8 die zugeordnete Sammelschiene und klemmt diese zwischen dem Endabschnitt 9 und dem Abdeckabschnitt 4 des Abdeckelementes 3.

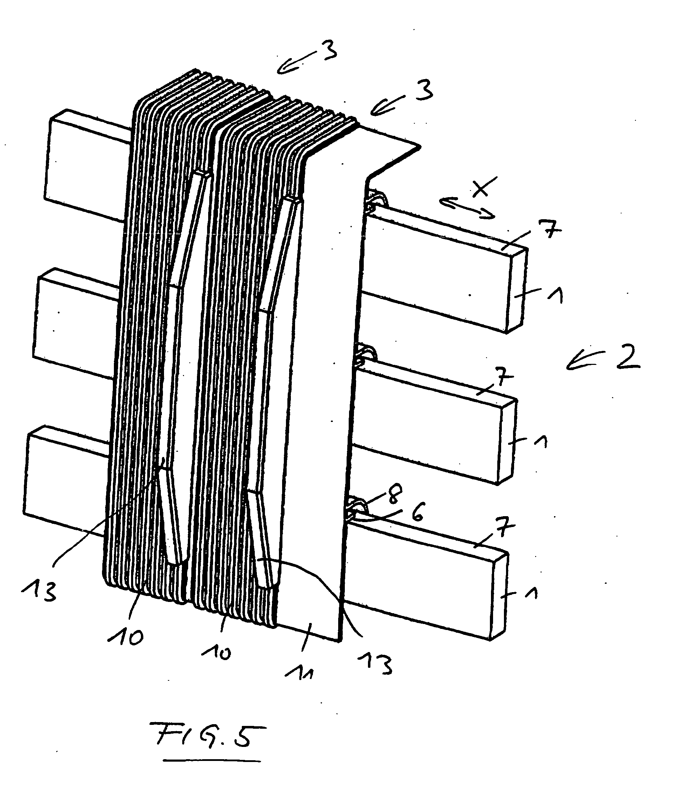

Entsprechend der von Fall zu Fall unterschiedlichen Längserstreckung X des Sammelschienensystems 2 sind zwei oder mehrere Abdeckelemente 3 überlappend zu positionieren. Dies geschieht entweder, indem, wie in der Figur 3 gezeigt, zwei Abdeckelemente 3, in Abstand voneinander, auf das Sammelschienensystem 2 aufgesteckt werden und dann, wie aus der Darstellung der Figur 5 ersichtlich ist, das eine Abdeckelement 3 in Richtung des anderen Abdeckelementes 3 in die überlappende Position verschoben wird. Es ist genauso möglich, zunächst das erste Abdeckelement 3 auf das Sammelschienensystem 2 aufzustecken und dann das zweite Abdeckelement 3, bereits in der überlappenden Position, auf das Sammelschienensystem 2 aufzustecken.

Benachbarte Abdeckelemente 3 können deshalb in überlappender Anordnung positioniert werden, weil das jeweilige Abdeckelement eine besondere Formgebung aufweist. So besitzt das jeweilige Abdeckelement 3 einen nach vorne versetzt positionierten Bereich 10 sowie einen nach hinten versetzt positionierten Bereich 11, die das Abdeckelement quasi in zwei Längshälften teilen. Nach vorne versetzt heißt damit vom Sammelschienensystem 2 weg gerichtet, so dass sich zwischen der jeweiligen Sammelschiene 1 und diesem versetzten Bereich des Abdeckelementes 3 ein Spalt 12 ergibt. In diesen kann das benachbarte Abdeckelement 3 mit seinem nach hinten versetzten Bereich 11 eingeführt werden, der im Bereich des langen Abdeckabschnittes 4 die Sammelschienen 1 kontaktiert. Um das jeweilige Abdeckelement 3 einfach in Längserstreckung X der Sammelschienen 1 verschieben zu können, ist es möglich, auf der den federnden Haken 8 abgewandten, somit vorderen Seite, mit einem Griffsteg 13 versehen, der im Bereich des Überganges von dem nach vorne versetzt angeordneten Abschnitt 10 zu dem nach hinten versetzt angeordneten Abschnitt 11 positioniert ist.

Der nach vorne versetzt angeordnete Abschnitt 10 des Abdeckelementes 3 ist mit Einschnürungen 15 versehen. Diese sind parallel zur Trennlinie 14 angeordnet, die zwischen dem nach vorne versetzten Abschnitt 10 und dem nach hinten versetzt angeordneten Abschnitt 11 positioniert ist. Entlang der jeweiligen Einschnürung 15 kann ein Teil des nach vorne versetzen Abschnittes 10 des Abdeckelementes 3 vom restlichen nach vorne versetzten Abschnitt 10 abgetrennt werden kann. Dies berücksichtigt den Umstand, dass gegebenenfalls mittels eines Abdeckelementes 3 nur noch ein solches Maß der Längserstreckung X des Sammelschienensystems 2 abzudecken ist, das geringer ist als die Breitenerstreckung des Abdeckelementes 3. Die Anschläge 6 und die federnden Haken 8 sind nur in dem nach hinten versetzt angeordneten Abschnitt 11 des Abdeckelementes 3 angeordnet, so dass, ohne Beeinflussung dieser Bauteile, Bereiche des nach vorne versetzt angeordneten Abschnittes 10 des Abdeckelementes 3 abgetrennt werden können. Das Abtrennen erfolgt beispielsweise durch Abschneiden entlang einer der Einschnürungen 15 oder durch Abbrechen entlang dieser.

Das jeweilige Abdeckelement ist einteilig ausgebildet und besteht aus Kunststoff. Es ist vorzugsweise als Spritzgußteil gestaltet.

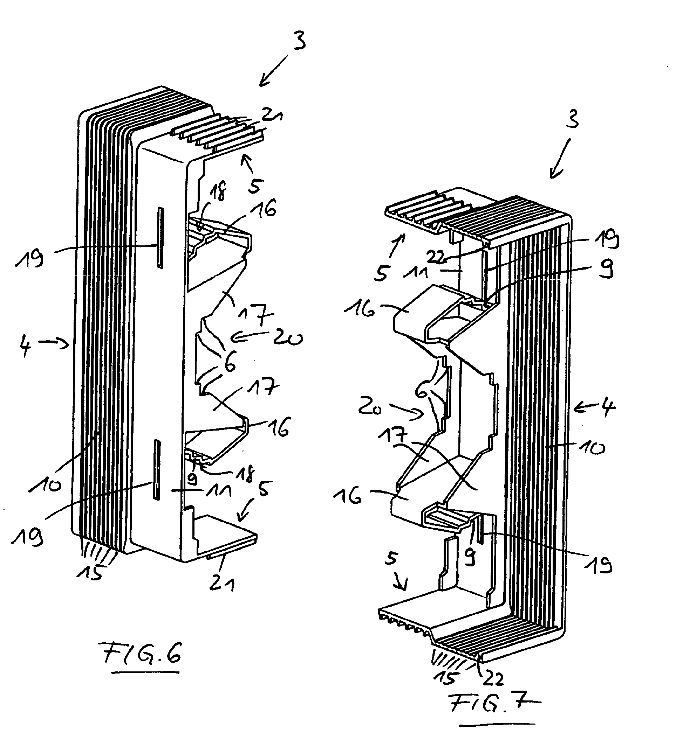

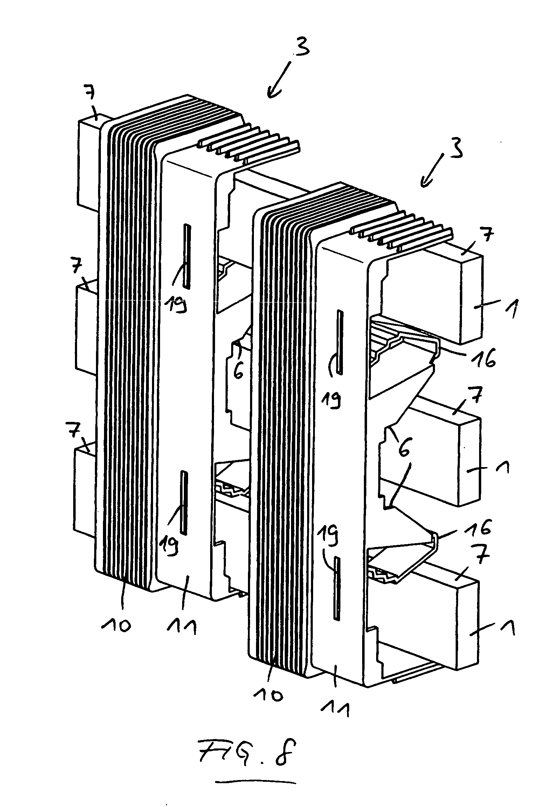

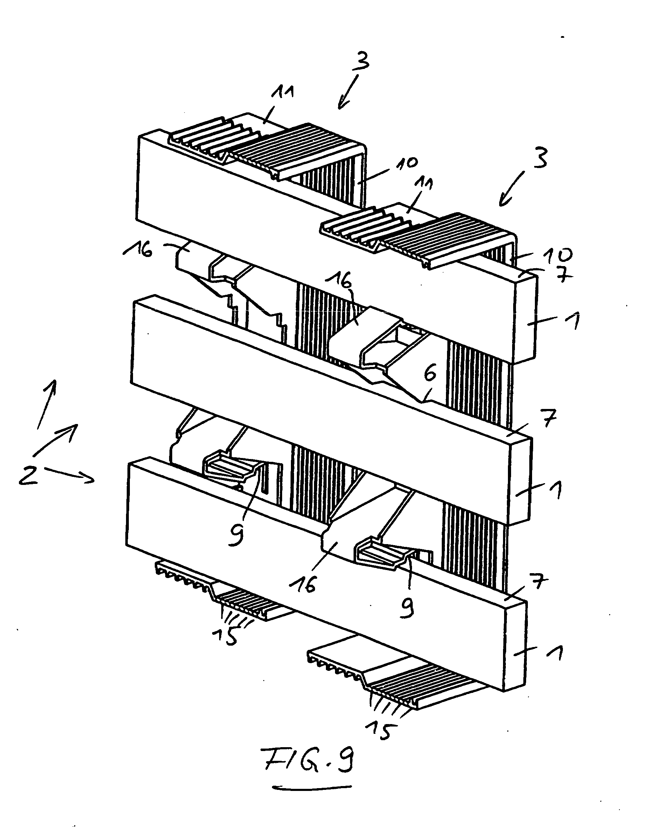

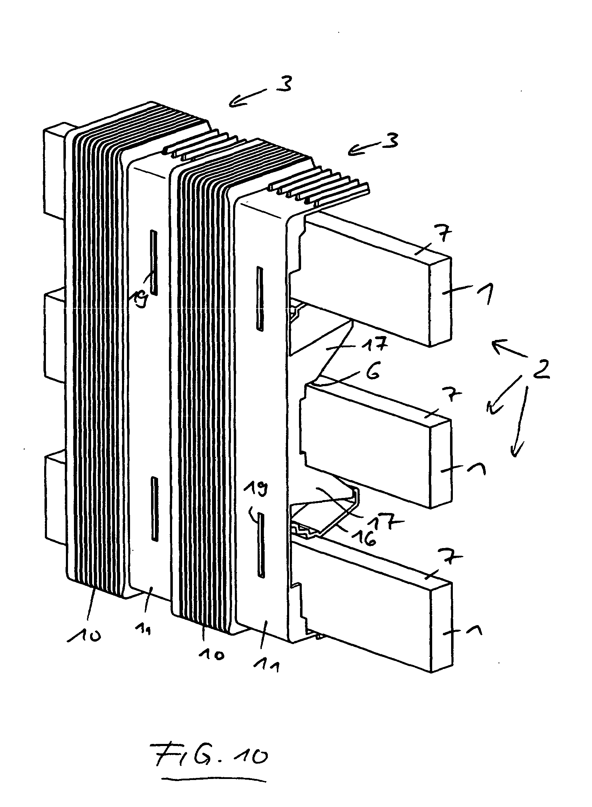

### Ausführungsform nach den Figuren 6 bis 11:

Die Ausführungsform nach den Figuren 6 bis 11 unterscheidet sich von derjenigen nach den Figuren 1 bis 5 nur bezüglich der L-förmigen Gestaltung des Abdeckelementes 3, der Ausbildung des Steckansatzes in Form des federnden Haken 8 mit dem Anschlag 6, sowie des Griffsteges 13. Unter diesem Aspekt sind in ihrer Anordnung und Wirkungsweise übereinstimmende Teile der beiden Ausführungsformen der Einfachheit halber mit denselben Bezugsziffern bezeichnet.

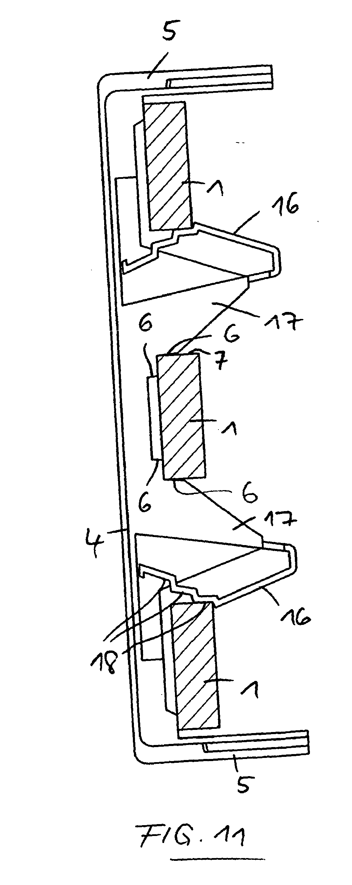

Bei der Ausführungsform nach den Figuren 6 bis 11 ist das jeweilige Abdeckelement 3 U-formig ausgebildet und weist somit einen langen flächigen Abdeckabschnitt 4 und zwei parallele kurze Bereiche 5 auf. Aufgrund dieser U-förmigen Gestaltung kann dieses Abdeckelement 3, im Gegensatz zu dem Abdeckelement gemäß der Ausführungsform nach den Figuren 1 bis 5, nur senkrecht zur Ebene der Sammelschienen 1 auf das Sammelschienensystem 2 aufgesetzt werden. Hierzu sind die Steckansätze nicht als federnde Haken 8 sondern als Rastansätze 16 ausgebildet, die federnd an einem Profilvorsprung 17 des Abdeckelementes 3 angelenkt sind. Es sind nur den beiden äußeren Sammelschienen 1 blattfederförmige Rastansätze 16 zugeordnet, die im Bereich ihrer Enden Stufenabschnitte 18 aufweisen. Der Querschnittsdarstellung nach Figur 11 sind drei Stufenabschnitte 18 pro Rastansatz 16 zu entnehmen, die so dimensioniert sind, dass das Abdeckelement auf Sammelschienen unterschiedlicher Sammelschienenquerschnitte aufgesteckt werden kann, beispielsweise Querschnitte von 5 mm x 20 mm, 10 mm x 20 mm, 5 mm x 30 mm, 10 mm x 30 mm. Gelöst werden kann die Abdeckung vom Sammelschienensystem, indem ein spitzer Gegenstand, beispielsweise die Klinge eines Schraubendrehers durch Schlitzöffnungen 19 im nach hinten versetzt positionierten Bereich 11 des Abdeckelementes 3 durchgesteckt wird und in Kontakt mit dem freien Ende des Rastansatzes 16 gebracht werden kann, der infolgedessen in die Außereingriffstellung mit der zugeordneten Sammelschiene 1 überführbar ist. Der Profilvorsprung 17 weist einen zentralen, abgestuften Bereich 20 auf, der es gestattet, Sammelschienen, beispielsweise mit einer Breitenabmessung von 20 oder 30 mm, zwischen sich relativ spielfrei aufzunehmen. Insofern sind die Anschläge 6 im Profilvorsprung 17 verwirklicht. Bei dieser Ausführungsform weisen die Abschnitte 11 in den kurzen Bereichen 5 parallele Einführstege 21 auf, wobei einer der Einführstege 21, entsprechend dem seitlichen Versetzungsgrad der benachbarten Abdeckelemente 3, in eine komplementäre Nut 22 des Abschnittes 10 in den kurzen Bereichen 5 einschiebbar ist. Benachbarte Abdeckelemente sind infolgedessen in Längsrichtung der Sammelschienen nicht auseinanderschiebbar.

## Patentansprüche

1. Abdeckung (3, 3) für ein Sammelschienensystem (2), wobei die Abdeckung (3, 3) auf mindestens eine Sammelschiene (1) aufsteckbar ist, wobei die Abdeckung (3, 3) durch mindestens zwei Abdeckelemente (3) gebildet ist, die flächige Abdeckabschnitte (4) für die Sammelschienen (1) aufweisen, wobei die Abdeckelemente (3), quer zur Längserstreckung (X) der Sammelschienen (1) positioniert, auf die Sammelschiene (1) aufsteckbar und in überlappende Anordnung bringbar sind, **dadurch gekennzeichnet, dass** die Abdeckelemente (3) der Abdeckung senkrecht zur Ebene der Sammelschienen (1) auf mindestens eine der Sammelschienen (1) aufsteckbar sind.

2. Abdeckung nach Anspruch 1, **dadurch gekennzeichnet, dass** das jeweilige Abdeckelement (3) im Querschnitt U- oder L-förmig ausgebildet ist und der längere Abschnitt (4) des U bzw. der längere Abschnitt (4) des L den flächigen Abdeckabschnitt (4) für die Sammelschienen (1) darstellt, sowie die kurzen Bereiche (5) des U bzw. der kurze Bereich (5) des L die äußere Sammelschiene (1) des Sammelschienensystems (2) seitlich abdeckt.

3. Abdeckung nach Anspruch 1 oder 2, **dadurch gekennzeichnet, dass** die Abdeckelemente (3) der Abdeckung horizontal und parallel zueinander angeordnetet Sammelschienen (1) dienen.

4. Abdeckung nach einem der Ansprüche 1 bis 3, **dadurch gekennzeichnet, dass** das jeweilige Abdeckelement (3) mit mindestens einem Steckansatz (16) zum Aufstecken auf die Sammelschiene (1) versehen ist.

5. Abdeckung nach Anspruch 4, **dadurch gekennzeichnet, dass** der mindestens eine Steckansatz (16) federnd nachgiebig ist.

6. Abdeckung nach Anspruch 4 oder 5, **dadurch gekennzeichnet, dass** der mindestens eine Steckansatz (16) als Rastansatz (16) ausgebildet ist, insbesondere als federnde Rastnase (16) ausgebildet ist.

7. Abdeckung nach Anspruch 6, **dadurch gekennzeichnet, dass** der Rastansatz (16), insbesondere der als Rastnase ausgebildete Rastansatz (16) entsprechend der veränderlichen Sammelschienenstärke stufenförmig ausgebildet ist.

8. Abdeckung nach einem der Ansprüche 1 bis 7, **dadurch gekennzeichnet, dass** das Abdeckelement (3) mindestens einen Anschlag (6) aufweist, den die diesem zugewandte Sammelschiene (1) im Bereich einer Längsseite kontaktiert.

9. Abdeckung nach einem der Ansprüche 1 bis 8, **dadurch gekennzeichnet, dass** das Abdeckelement (3) plattenförmig ausgebildet ist.

10. Abdeckelement nach einem der Ansprüche 1 bis 9, **dadurch gekennzeichnet, dass** das Abdeckelement (3) aus Kunststoff besteht.

11. Abdeckung nach einem der Ansprüche 1 bis 10, **dadurch gekennzeichnet, dass** das Abdeckelement (3) einteilig ausgebildet ist.

12. Abdeckung nach einem der Ansprüche 1 bis 11, **dadurch gekennzeichnet, dass** die Abdeckelemente (3) identisch ausgebildet sind und ein nach vorne versetzter Bereich (10) eines Abdeckelementes (3) in die überlappende Anordnung mit einem nach hinten versetzten Bereich (11) eines benachbarten Abdeckelementes (3) bringbar ist, wobei das jeweilige Abdeckelement (3) den nach vorne versetzten Bereich (10) und den nach hinten versetzten Bereich (11) aufweist.

13. Abdeckung nach einem der Ansprüche 1 bis 12, **dadurch gekennzeichnet, dass** wesentliche Bereiche des Abdeckelements (3) mit Einschnürungen (15) versehen sind, derart, dass das Abdeckelement (3) entlang einer beliebigen Einschnürung (15) getrennt werden kann.

14. Abdeckung nach Anspruch 13, **dadurch gekennzeichnet, dass** die Steckansätze (16) in demjenigen Bereich des Abdeckelements (3) angeordnet sind, der nicht mit den Einschnürungen (15) versehen ist.

15. Abdeckung nach Anspruch 13 oder 14, **dadurch gekennzeichnet, dass** die Einschnürungen (15) in dem nach vorne versetzten Bereich (10) des Abdeckelementes (3) angeordnet sind.

## Claims

1. Cover (3, 3) for a bus-bar (2), whereby the cover (3, 3) can be placed on at least one bus-bar (1), whereby the cover (3, 3) is formed by at least two cover elements (3) that have areal cover sections (4) for the bus-bars (1), whereby the cover elements (3) are positioned transversely in relation to the lengthwise extension (X) of bus-bars (1), can be placed on the bus-bars (1) and can be applied in an overlapping arrangement, **characterized in that** the cover elements (3) of the cover can be put on vertically, in relation to the plane of the bus-bars, (1) on at least one of the bus-bars (1).

2. Cover in accordance with claim 1, **characterized in that** the given cover element (3) is cross-sectionally U- or L-shaped and the longer section (4) of the U or of the L represents the areal cover section (4) for the bus-bar (1), and the short areas (5) of the U or the short area (5) of the L laterally covers the outer bus-bar (1) of the bus-bar system (2).

3. Cover in accordance with claims 1 or 2, **characterized in that** the cover elements (3) of the cover serve horizontal, parallel bus-bars (1).

4. Cover in accordance with one of claims 1 to 3, **characterized in that** the given cover element (3) has at least one connector appendage (16) to be placed on the bus-bar (1).

5. Cover in accordance with claim 4, **characterized in that** the at least one connector appendage (16) yields like a spring.

6. Cover in accordance with claims 4 or 5, **characterized in that** the at least one connector appendage (16) is developed as a locking projection (16), particularly as a springy detent (16).

7. Cover in accordance with claim 6, **characterized in that** the locking projection (16), particularly the locking projection (16) in the form of a detent (16), is in stepped form in accordance with the variable thickness of the bus-bars.

8. Cover in accordance with claims 1 to 7, **characterized in that** the cover element (3) has at least one abutment (6) that comes in contact with the bus-bar (1) facing it in the area of a lengthwise side.

9. Cover in accordance with claims 1 to 8, **characterized in that** the cover element (3) is platelike.

10. Cover in accordance with claims 1 to 9, **characterized in that** the cover element (3) is made of plastic.

11. Cover in accordance with claims 1 to 10, **characterized in that** the cover element (3) is in the form of a single piece.

12. Cover in accordance with claims 1 to 11, **characterized in that** the cover elements (3) are identical and an area (10), of a cover element (3), that is displaced forwards, can be brought to overlap with an area (11), of an adjacent cover element (3), that is shifted backwards, whereby the given cover element (3) has the area (10) that is shifted forwards and the area (11) that is shifted backwards.

13. Cover in accordance with claims 1 to 12, **characterized in that** substantial areas of the cover element (3) have nicks (15) such that the cover element (3) can be separated along any nick (15).

14. Cover in accordance with claim 13, **characterized in that** the connector appendages (16) are disposed **in that** area of the cover element (3) that does not have the nicks (15).

15. Cover in accordance with claim 13 or 14, **characterized in that** the nicks (15) are disposed in the area (10), of the cover element (3), that is shifted forwards.

## Revendications

1. Recouvrement (3, 3) pour un jeu de barres (2), le recouvrement (3, 3) étant à même de venir s'enficher sur au moins une barre collectrice (1), le recouvrement (3, 3) étant formé par au moins deux éléments de recouvrement (3) qui présentent des tronçons de recouvrement (4) à deux dimensions pour les barres collectrices (1), les éléments de recouvrement (3), positionnés transversalement par rapport à l'étendue longitudinale (X) des barres collectrices (1), étant à même de venir s'enficher sur la barre collectrice (1) et de venir se disposer dans un arrangement de chevauchement, **caractérisé en ce que** les éléments de recouvrement (3) du recouvrement peuvent venir s'enficher perpendiculairement au plan des barres collectrices (1) sur au moins une des barres collectrices (1).

2. Recouvrement selon la revendication 1, **caractérisé en ce que** l'élément de recouvrement respectif (3) est réalisé en forme de U ou en forme de L en section transversale, le grand tronçon (4) du U, respectivement le grand tronçon (4) du L représentant la section de recouvrement (4) à deux dimensions pour les barres collectrices (1), et les petites zones (5) du U respectivement, la petite zone (5) du L recouvrant latéralement la barre collectrice externe (1) du jeu de barres collectrices (2).

3. Recouvrement selon la revendication 1 ou 2, **caractérisé en ce que** les éléments de recouvrement (3) du recouvrement font office de barres collectrices (1) disposées à l'horizontale et parallèlement l'une à l'autre.

4. Recouvrement selon l'une quelconque des revendications 1 à 3, **caractérisé en ce que** l'élément de recouvrement respectif (3) est muni d'au moins une saillie d'enfichage (16) à des fins d'enfichage sur la barre collectrice (1).

5. Recouvrement selon la revendication 4, **caractérisé en ce que** ladite au moins une saillie d'enfichage (16) est déformable à la manière d'un ressort.

6. Recouvrement selon la revendication 4 ou 5, **caractérisé en ce que** ladite au moins une saillie d'enfichage (16) est réalisée sous la forme d'une saillie d'encliquetage (16), en particulier sous la forme d'un nez d'encliquetage élastique (16).

7. Recouvrement selon la revendication 6, **caractérisé en ce que** la saillie d'encliquetage (16), en particulier la saillie d'encliquetage (16) réalisée sous la forme d'un nez d'encliquetage, est réalisée en formant un gradin de manière correspondante à l'épaisseur variable des barres collectrices.

8. Recouvrement selon l'une quelconque des revendications 1 à 7, **caractérisé en ce que** l'élément de recouvrement (3) présente au moins une butée (6) qui entre en contact avec la barre collectrice (1) tournée vers elle, dans la zone d'un côté longitudinal.

9. Recouvrement selon l'une quelconque des revendications 1 à 8, **caractérisé en ce que** l'élément de recouvrement (3) est réalisé en forme de plaque.

10. Recouvrement selon l'une quelconque des revendications 1 à 9, **caractérisé en ce que** l'élément de recouvrement (3) est constitué d'une matière synthétique.

11. Recouvrement selon l'une quelconque des revendications 1 à 10, **caractérisé en ce que** l'élément de recouvrement (3) est réalisé en une seule pièce.

12. Recouvrement selon l'une quelconque des revendications 1 à 11, **caractérisé en ce que** les éléments de recouvrement (3) sont réalisés de manière identique, une zone (10) d'un élément de recouvrement (3), décalée vers l'avant, étant à même de venir se disposer dans l'agencement de chevauchement avec une zone (11) d'un élément de recouvrement voisin (3), décalée vers l'arrière, l'élément de recouvrement respectif (3) présentant la zone (10) décalée vers l'avant et la zone (11) décalée vers l'arrière.

13. Recouvrement selon l'une quelconque des revendications 1 à 12, **caractérisé en ce que** des zones essentielles de l'élément de recouvrement (3) sont munies de rétrécissements (15), de telle sorte que l'élément de recouvrement (3) peut être séparé le long d'un rétrécissement quelconque (15) .

14. Recouvrement selon la revendication 13, **caractérisé en ce que** les saillies d'enfichage (16) sont disposées dans la zone de l'élément de recouvrement (3) qui n'est pas munie des rétrécissements (15).

15. Recouvrement selon la revendication 13 ou 14, **caractérisé en ce que** les rétrécissements (15) sont disposés dans la zone (10) de l'élément de recouvrement (3), décalée vers l'avant.
